# EUROPÄISCHE PATENTSCHRIFT

(11) **EP 2 375 175 B1**
(45) Veröffentlichungstag und Bekanntmachung des Hinweises auf die Patenterteilung: **14.10.2015**
(21) Anmeldenummer: 11160380.9
(22) Anmeldetag: 30.03.2011
(51) Int. Cl.: F24D 11/00

(54) **Vorrichtung und Verfahren zur Wärmeversorgung von Gebäuden**
Device and method for supplying buildings with heat
Dispositif et procédé destiné à l'alimentation en chaleur de bâtiments

(30) Priorität: 07.04.2010 DE 102010016343
(43) Veröffentlichungstag der Anmeldung: 12.10.2011
(73) Patentinhaber: Fachhochschule München, 80335 München (DE)
(72) Erfinder: Ziegler, Franz Josef, 86504 Merching (DE)
(74) Vertreter: Hoefer & Partner Patentanwälte mbB

(56) Entgegenhaltungen:
- AT-B- 400 359
- DE-U1- 29 806 464
- GB-A- 2 368 896

## Beschreibung

Die Erfindung betrifft eine Vorrichtung zur Wärmeversorgung von Gebäuden. Die Erfindung betrifft zudem ein entsprechendes Verfahren zur Wärmeversorgung von Gebäuden mit den Merkmalen des Oberbegriffs des Verfahrensanspruchs 11.

Die AT 400359 B zeigt eine Pufferspeicherheizanlage für eine Heizung und eine Brauchwasseraufbereitung, gemäß dem Oberbegriff des Anspruchs 1, bei welcher das Brauchwasser über einen gesonderten aus dem Pufferspeicher gespeisten Wärmetauscher erwärmbar ist und das Heizmedium für die Heizung aus dem Pufferspeicher abgezogen und in den Pufferspeicher rückführbar ist. Der Heizungsvorlauf ist dabei oberhalb der Höhenmitte des Pufferspeichers angeschlossen und das Heizmedium wird für den Brauchwasser- Wärmetauscher am Kopf des Pufferspeichers über eine Pumpe abgezogen und in den unteren Bereich des Pufferspeichers zurückgeführt. In die Rücklaufleitung vom Wärmetauscher in den Speicher ist ein Temperaturfüller eingebaut. Die Pumpe für den Wärmetauscher ist in Abhängigkeit von der gemessenen Rücklauftemperatur geregelt, wodurch es möglich wird, auch in der Übergangszeit bei geringerer Heizentnahme und unverminderter Warmwasserentnahme den Energieverbrauchen und die vom Kessel zur Verfügung gestellter Leistung herabzusetzen.

Zur Wärmeversorgung von Gebäuden, beispielsweise von Büro- oder Wohngebäuden ist bekannt, von einer an einem beliebigen Aufstellungsort platzierten Wärmequelle zur Verfügung gestellte Wärme mittels eines durch Vor- und Rücklauf zirkulierenden Wärmeträgermediums von der Wärmequelle abzuführen und einer entfernt von der Wärmequelle angeordneten Wärmesenke zuzuführen, wobei die Wärme dem Wärmeträgermedium an der Wärmesenke mittels primärseitig von dem Wärmeträgermedium durchströmter und sekundärseitig beispielsweise mit wenigstens einem Verbrauchskreislauf verbundener Wärmetauscher zu einem gewünschten Zweck entzogen wird.

Als Wärmequellen kommen beispielsweise solarthermische Kollektoren sowie geothermische Einrichtungen in Frage, aber auch Fernwärme sowie klassische Hausfeuerungsanlagen, bei denen beispielsweise ständig, periodisch oder bei Bedarf zyklisch eine eigens zur Wärmeerzeugung vorgesehene chemische Verbrennung stattfindet. Bei der Fernwärme kann es sich sowohl um Kraft-Wärme-Kopplung handeln, bei der die Wärme eines unteren Temperaturniveaus eines beispielsweise der Elektrizitätserzeugung dienenden thermodynamischen Kreisprozesses der Wärmeversorgung von Gebäuden zur Verfügung gestellt wird, als auch um eine Prozesswärmenutzung, wie sie etwa durch Nutzung der Abwärme eines industriellen Herstellungsprozesses oder eines anderen Prozesses, wie etwa bei der Müllverbrennung oder dergleichen, zur Wärmeversorgung von Gebäuden bekannt ist. Auch Kombinationen der beschriebenen Wärmequellen sowie der dort ablaufenden Prozesse zur Wärmeerzeugung sind möglich, wie beispielsweise von Blockheizkraftwerken und Brennstoffzellen bekannt.

Bei dem Wärmeträgermedium handelt es sich zumindest bei der Wärmeversorgung von Wohngebäuden üblicherweise um Wasser, dessen Einsatzbereich druckabhängig durch Gefrier-, Side-, Sublimations- und Taupunkt vorgegeben ist.

Bei dem gewünschten Zweck kann es sich beispielsweise um eine Beheizung eines oder mehrerer Räume und/oder um eine Brauch- bzw. Trinkwassererwärmung handeln.

Zur Beheizung von Räumen können in einem unmittelbar in den Primärkreislauf eingebundenen Heizkreis angeordnete, als Radiatoren oder Fußbodenheizung ausgeführte Wärmetauscher dienen, welche primärseitig unmittelbar vom Wärmeträgermedium durchströmt werden und welche sekundärseitig im Falle von Radiatoren der Raumluft ausgesetzt sind und die von dem Wärmeträgermedium transportierte Wärme durch Wärmeübergang und Strahlung abgeben, oder im Falle einer Fußbodenheizung die von dem Wärmeträgermedium transportierte Wärme sekundärseitig durch Wärmeleitung an das umgebende Material des Fußbodens abgeben.

Zur Trinkwassererwärmung kommen generell Verbrauchskreisläufe zum Einsatz, welche sekundärseitig von primärseitig vom Wärmeträgermedium durchströmten Wärmetauschern angeordnet sind. Sekundärseitig sind die Wärmetauscher der Verbrauchskreisläufe von Trinkwasser durchströmt, an welches die primärseitig vom Wärmeträgermedium abgegebene Wärme durch Wärmeübergang und Wärmeleitung abgegeben wird. Hierbei ist zwischen einer Frischwassererwärmung und einer Warmwasserzirkulation zu unterscheiden. Bei der Frischwassererwärmung wird bei stattfindendem Verbrauch kaltes Frischwasser aus einem beispielsweise öffentlichen Trinkwassernetz entnommen und auf eine gewünschte Temperatur aufgeheizt. Bei der Warmwasserzirkulation wird Trinkwasser, welches bereits eine Frischwassererwärmung durchlaufen hat, in einem gebäudeeigenen Warmwasserzirkulationsnetz ständig umgewälzt und auf einer eingestellten Temperatur gehalten, um bei einsetzendem Verbrauch von Beginn an Warmwasser zur Verfügung stellen zu können.

Nachteilig an den bekannten Wärmeversorgungsvorrichtungen ist deren lastabhängige Rücklauftemperatur, insbesondere deren wenigstens zeitweise hohe Rücklauftemperatur. Finden beispielsweise kein Warmwasserverbrauch und keine Beheizung statt, herrscht eine hohe Rücklauftemperatur, wohingegen eine niedrigere Rücklauftemperatur herrscht, wenn eine starke Beheizung und ein hoher Warmwasserverbrauch stattfinden. Der geschilderte Nachteil hat zur Folge, dass wegen der einerseits durch den Einsatzbereich des Wärmeträgermediums und andererseits durch das beschränkte Temperaturniveau des der Wärmequelle zugrunde liegenden, die Wärme zur Verfügung stellenden Prozesses beschränkten Vorlauftemperatur mit zunehmender Rücklauftemperatur weniger Wärme von der Wärmequelle abgeführt wird, diese also schlechter genutzt wird und deren Verluste zunehmen bzw. deren Wirkungsgrad abnimmt. Im Falle von Kraft-Wärme-Kopplung und Blockheizkraftwerken hat die Rücklauftemperatur außerdem einen unmittelbaren Einfluss auf das untere Temperaturniveau des thermodynamischen Kreisprozesses und damit auf den Wirkungsgrad desselben, wobei bei ansonsten gleich bleibenden Bedingungen mit zunehmender Rücklauftemperatur der Wirkungsgrad des thermodynamischen Kreisprozesses abnimmt. Ferner hat der geschilderte Nachteil zur Folge, dass mit zunehmender Rücklauftemperatur die Wärmeverluste des Wärmetransports zwischen Wärmequelle und Wärmesenke ebenfalls zunehmen, da die Wärmeverluste des Rücklaufs durch Wärmeleitung, Strahlung und Wärmeübergang bzw. Konvektion um so höher sind, je höher dessen Temperaturniveau ist. Darüber hinaus führt eine veränderliche Rücklauftemperatur zu einer Einschränkung bei der Wahl möglicher Mittel für den Wärmetransport. Beispielsweise sind Heatpipes nur bedingt zum Wärmetransport zwischen Wärmequellen und Wärmesenken mit veränderlichen Temperaturniveaus geeignet.

Eine Vorrichtung zur Trinkwassererwärmung in Gebäuden, welche eine niedrige Rücklauftemperatur sicherstellen soll, ist durch DE 10 2008 014 204 A1 bekannt. Die Vorrichtung hat einen Primärkreislauf, in dem ein Wärmeträgermedium zirkuliert, um von einer Wärmequelle zur Verfügung gestellte Wärme von dieser abzuführen und zwei Verbrauchskreisläufen zuzuführen. Der Primärkreislauf hat einen von der Wärmequelle wegführenden Vorlauf und einen zur Wärmequelle hinführenden Rücklauf. Entfernt von der Wärmequelle sind ein erster Wärmetauscher, ein mit dem Wärmeträgermedium befüllter und durchströmter Pufferspeicher und ein zweiter Wärmetauscher zwischen Vor-und Rücklauf in dem Primärkreislauf angeordnet. Der erste und der zweite Wärmetauscher sind dabei jeweils auf ihren Primärseiten vom Wärmeträgermedium des Primärkreislaufs durchströmt. Sekundärseitig sind die beiden Wärmetauscher von den Verbrauchskreisläufen durchströmt. Ein erster Verbrauchskreislauf umfasst eine Warmwasserzirkulation. Ein zweiter Verbrauchskreislauf umfasst eine Frischwassererwärmung. Der zweite Wärmetauscher ist sekundärseitig ausschließlich mit dem zweiten Verbrauchskreislauf verbunden, wohingegen der erste Wärmetauscher sekundärseitig sowohl mit dem ersten, als auch dem zweiten Verbrauchskreislauf verbunden ist. Der zweite Wärmetauscher dient dabei ausschließlich einer Trinkwasservorwärmung, wohingegen der erste Wärmetauscher einer Trinkwassernachwärmung dient. Im Primärkreislauf ist der erste Wärmetauscher in Serie zu einer Parallelanordnung aus Pufferspeicher und zweitem Wärmetauscher angeordnet. Der erste Wärmetauscher ist direkt an den Vorlauf angeschlossen, so dass der vom Vorlauf kommende, heiße Volumenstrom immer zunächst den ersten Wärmetauscher durchströmt. Parallel zu dem ersten Wärmetauscher liegt ein Bypass zur Beimischung von Wärmeträgermedium, welches den ersten Wärmetauscher bereits durchströmt hat, in den Vorlauf. Eine vor dem ersten Wärmetauscher angeordnete, erste regelbare Pumpe und/oder ein im Bypass angeordnetes regelbares Zweiwegeventil regelt die Beimischung. Ein in den oberen, heißen Bereich des Pufferspeichers mündender Zu- und Ablauf, der Ablauf des ersten Wärmetauschers und ein kalter Zulauf zum zweiten Wärmetauscher münden ineinander. Ebenso münden ein in den unteren, kalten Bereich des Pufferspeichers mündender Zu- und Ablauf, ein Ablauf des zweiten Wärmetauschers und der Rücklauf zur Wärmequelle ineinander. Vor dem zweiten Wärmetauscher und parallel zum Pufferspeicher ist ebenfalls eine regelbare Pumpe angeordnet. Diese zweite Pumpe ist so geregelt, dass bei geringer Wärmeabnahme auf den Sekundärseiten der Wärmetauscher der Pufferspeicher geladen und bei hoher Wärmeabnahme entladen wird. Hierzu fördert die zweite Pumpe bei geringer Wärmeabnahme sekundärseitig des zweiten Wärmetauschers einen Volumenstrom, der größer ist, als der durch Vor- und Rücklauf zirkulierende Volumenstrom. Hierdurch nimmt der Pufferspeicher bei geringer Wärmeabnahme durch die Verbrauchskreisläufe heißes Wärmeträgermedium des Primärkreislaufs auf und gibt kaltes Wärmeträgermedium in den Rücklauf ab. Um im Pufferspeicher eine Temperaturschichtung sicherzustellen, welche bei Zufuhr eines Volumenstroms heißen Wärmeträgermediums die Abgabe eines Volumenstroms kalten Wärmeträgermediums gewährleistet, ist vorgesehen, das heiße Wärmeträgermedium bei entsprechender Fördermenge der zweiten Pumpe möglichst turbulenzarm von unten in den Pufferspeicher zu transportieren und oben kaltes Wärmeträgermedium zu entnehmen. Wegen der ständigen Durchströmung des ersten Wärmetauschers und der wahlweise Durchströmung des zweiten Wärmetauschers und/oder des Pufferspeichers kann das zugrunde liegende Durchflussprinzip als zweistufig beschrieben werden, wobei gilt:
WT1 UND (WT2 UND/ODER PU)
mit erstem Wärmetauscher WT1, zweitem Wärmetauscher WT2 und Pufferspeicher PU. Hierdurch ergeben sich die Durchströmungsalternativen WT1 UND WT2 oder alternativ WT1 UND PU oder alternativ WT1 UND WT2 UND PU und somit insgesamt drei Freiheitsgrade bei Auslegung und Betrieb. Nachteilig ist hierbei die schwierige Ausgestaltung einer turbulenzarmen Strömung, da die Mündungen in den Pufferspeicher prinzipiell durch einen stark Verlust- und damit Turbulenz behaftete Carnot-Borda Mündung beschrieben werden kann. Darüber hinaus stellt sich im stehenden Pufferspeicher im Gravitationsfeld der Erde unabhängig vom Turbulenzgrad eine Durchmischung aufgrund von Konvektion ein. Ein weiterer Nachteil ergibt sich durch das gewählte zweistufige Durchflussprinzip, bei dem zunächst immer der erste Wärmetauscher und dann bedarfsabhängig entweder der Pufferspeicher und/oder der zweite Wärmetauscher durchströmt werden. Zusammengefasst kann aufgrund der geschilderten Nachteile insbesondere bei geringer Wärmeabnahme durch die Verbrauchskreisläufe eine niedrige Rücklauftemperatur nicht zufrieden stellend sichergestellt werden. Ferner ist nachteilig, dass keine Beheizung von Räumen vorgesehen ist.

Durch DE 20 2007 010 410 U1 ist eine Vorrichtung zur Trinkwassererwärmung in Gebäuden bekannt, bei der eine Aufrechterhaltung einer Temperaturschichtung in einem Pufferspeicher sichergestellt werden soll. Die Vorrichtung hat einen Primärkreislauf, in dem ein Wärmeträgermedium zirkuliert, um von einer ersten und von einer zweiten Wärmequelle zur Verfügung gestellte Wärme von diesen abzuführen und zwei Verbrauchskreisläufen zur Trinkwassererwärmung zuzuführen. Bei den Verbrauchskreisläufen handelt es sich um eine Frischwassererwärmung und um eine Warmwasserzirkulation. In dem Primärkreislauf ist ein mit dem Wärmeträgermedium befüllter und durchströmter Pufferspeicher enthalten. Bei der ersten Wärmequelle handelt es sich um eine Hausfeuerungsanlage, in der eine Verbrennung stattfindet. Bei der zweiten Wärmequelle um einen solarthermischen Kollektor. Die erste Wärmequelle ist über den von dem Wärmeträgermedium durchströmten Vor- und Rücklauf direkt mit dem Pufferspeicher verbunden, so dass dieser durch den Zustrom des Vorlaufs und den Rückstrom des Rücklaufs ständig durchmischt wird. Die zweite Wärmequelle hat einen eigenen Sekundärkreislauf, welcher die von der zweiten Wärmequelle zur Verfügung gestellte Wärme über einen im Pufferspeicher angeordneten Pufferspeicher-Wärmetauscher dem Pufferspeicher zuführt. Der Pufferspeicher-Wärmetauscher ist im unteren, kalten Bereich des Pufferspeichers angeordnet, wohingegen der mit der ersten Wärmequelle verbundene Vorlauf in den oberen, heißen Bereich des Pufferspeichers mündet und der zur ersten Wärmequelle zurückführende Rücklauf oberhalb des kalten Bereichs des Pufferspeichers nahe dem oberen, heißen Bereich von diesem abgeht. Dadurch hat der Rücklauf zur ersten Wärmequelle ein ungünstig hohes Temperaturniveau. Ein erster und ein zweiter Wärmetauscher sind in Serie geschaltet parallel zu dem Pufferspeicher angeordnet. Die beiden Wärmetauscher sind primärseitig vom Wärmeträgermedium und sekundärseitig im Gegenstromprinzip vom Trinkwasser der Verbrauchskreisläufe durchströmt. Primärseitig ist je eine Pumpe vor jedem der beiden Wärmetauscher angeordnet. Eine Entnahme eines den ersten Wärmetauscher durchströmenden Volumenstroms heißen Wärmeträgermediums erfolgt im oberen, heißen Bereich des Pufferspeichers. Zwischen den beiden Wärmetauschern befindet sich primärseitig ein Abzweig, der in den mittleren Bereich des Pufferspeichers mündet. Durch diesen Abzweig kann bei Bedarf der im oberen, heißen Bereich entnommene und nach Durchströmen des ersten Wärmetauschers nunmehr kältere Volumenstrom vollständig oder zum Teil dem Pufferspeicher wieder zugeführt werden. Die Pumpe vor dem ersten Wärmetauscher läuft im Dauerbetrieb, wodurch der durch den ersten Wärmetauscher hindurchtretende Volumenstrom vorgegeben ist. Zwischen Pufferspeicher und der vor dem ersten Wärmetauscher angeordneten Pumpe befindet sich parallel zum ersten Wärmetauscher ein Bypass. Zwischen Pufferspeicher, erstem Wärmetauscher und Bypass ist noch vor der Pumpe ein regelbares Mehrwegeventil angeordnet. Durch Regelung des Mehrwegeventils kann der aus dem oberen, heißen Bereich des Pufferspeichers entnommene und durch den ersten Wärmetauscher strömende Volumenstrom bedarfsgerecht angepasst werden. Durch Regelung der Fördermenge der Pumpe vor dem zweiten Wärmetauscher kann ferner der Volumenstrom des durch den Abzweig in den mittleren Bereich des Pufferspeichers rückfließenden oder von dort entnommenen Wärmeträgermediums eingestellt werden. Der nach Durchströmen des zweiten Wärmetauschers kalte Volumenstrom wird einem unteren, kalten Bereich des Pufferspeichers wieder zugeführt. Wegen der ständigen Durchmischung des Pufferspeichers durch unmittelbar in den Pufferspeicher mündenden Vor- und Rücklauf einerseits sowie durch die permanente Entnahme und Rückführung des durch den ersten Wärmetauscher fließenden Volumenstromes andererseits und die zusätzliche wahlweise Durchströmung des zweiten Wärmetauschers kann das dem Primärkreislauf zugrunde liegende Durchflussprinzip beschrieben werden durch:
(PU UND WT1 ) ODER (PU UND WT1 UND WT2)
mit erstem Wärmetauscher WT1, zweitem Wärmetauscher WT2 und Pufferspeicher PU. Hierdurch ergeben sich die Durchströmungsalternativen PU UND WT1 sowie wahlweise PU UND WT1 UND WT2, was gerade einmal zwei Freiheitsgraden bei Auslegung und Betrieb entspricht. Sekundärseitig sind eine Warmwasserzirkulationspumpe in der Warmwasserzirkulation sowie ein erstes und ein zweites regelbares Zweiwegeventile vorgesehen. Die Warmwasserzirkulationspumpe ist in Serie zum ersten Wärmetauscher angeordnet. Das erste Zweiwegeventil ist sekundärseitig in Serie zum zweiten Wärmetauscher angeordnet und das zweite Zweiwegeventil in einem Abzweig, welcher einen sekundärseitigen Bypass zum zweiten Wärmetauscher bildet. Durch Regelung des ersten und zweiten Zweiwegeventils kann die Durchflussmenge der Warmwasserzirkulation sekundärseitig durch den zweiten Wärmetauscher hindurch eingestellt werden. Nachteilig hieran ist unter anderem, dass keine Beheizung von Räumen vorgesehen ist. Ein weiterer Nachteil ergibt sich dadurch, dass der Rücklauf der ersten Wärmequelle aufgrund seiner Nähe zum heißen Bereich des Pufferspeichers eine hohe Rücklauftemperatur aufweist, wodurch zumindest für die erste Wärmequelle die einleitend geschilderten Nachteile auftreten. Ein weiterer Nachteil ergibt sich durch die ständige Entnahme eines heißen Volumenstroms durch die vor dem ersten Wärmetauscher angeordnete Pumpe im oberen, heißen Bereich des Pufferspeichers. Durch die Rückführung im mittleren und/oder unteren, warmen bzw. kalten Bereich des Pufferspeichers kommt es zusätzlich zu der bereits durch den ständigen Zu- und Abstrom durch Vor- und Rücklauf stattfindenden Durchmischung zu einer weiteren, ständigen Durchmischung des Pufferspeichers. Eine Temperaturschichtung im Pufferspeicher kann dadurch nicht aufrechterhalten werden.

Der Erfindung liegt die Aufgabe zugrunde, eine sowohl zur Trinkwassererwärmung, als auch vorzugsweise zur Beheizung von Räumen geeignete Vorrichtung zur Wärmeversorgung von Gebäuden zu entwickeln, welche eine niedrige Rücklauftemperatur sicherstellt.

Die Aufgabe wird gelöst durch eine Vorrichtung zur Wärmeversorgung von Gebäuden mit den Merkmalen des Anspruchs 1.

Demnach ist eine Vorrichtung zur Wärmeversorgung von Gebäuden vorgesehen, welche einen von einem Wärmeträgermedium durchströmten, mit einem Vorlauf und einem Rücklauf mit einer Wärmequelle verbundenen Primärkreislauf umfasst. In dem Primärkreislauf ist wenigstens ein mit dem Wärmeträgermedium befüllter und durchströmter Pufferspeicher zur Zwischenspeicherung von durch den Primärkreislauf von der Wärmequelle aufgenommener Wärme angeordnet. In dem Primärkreislauf sind ferner ein erster Wärmetauscher und ein zweiter Wärmetauscher vorgesehen. Der erste Wärmetauscher und der zweite Wärmetauscher sind dabei primärseitig von dem Wärmeträgermedium durchströmt. Der erste Wärmetauscher ist sekundärseitig mit einem ersten Verbrauchskreislauf verbunden. Der zweite Wärmetauscher ist sekundärseitig mit einem zweiten Verbrauchskreislauf verbunden. Beide Wärmetauscher sind außerhalb des Putterspeichers angeordnet. Dem ersten Verbrauchskreislauf und dem zweiten Verbrauchskreislauf wird wenigstens ein Teil der von der Wärmequelle zur Verfügung gestellten und vom Primärkreislauf aufgenommenen Wärme zugeführt. Der Pufferspeicher gleicht eine gegebenenfalls vorherrschende Differenz zwischen von dem Primärkreislauf aufgenommener und zumindest momentan an die Verbrauchskreisläufe abgegebener Wärme bei gleich bleibender Wärmeaufnahme des Primärkreislaufs bzw. Wärmeabnahme des Primärkreislaufs von der Wärmequelle aus. Dem ersten und zweiten Wärmetauscher sind hierbei vorzugsweise zumindest jeweils eine erste Pumpe bzw. eine zweite Pumpe zugeordnet, um die durch den ersten und zweiten Wärmetauscher primärseitig hindurch strömenden Volumenströme regeln zu können. Alternativ oder zusätzlich zu den Pumpen können auch die Volumenströme regelnde Ventile vorgesehen sein. Der zweite Wärmetauscher ist parallel zum Pufferspeicher angeordnet. Ein mit einem kalten Bereich des Pufferspeichers verbundener Zu- und Ablauf, ein Ablauf des zweiten Wärmetauschers und der Rücklauf münden ineinander. Durch diese Anordnung kann bei vorgegebenem durch Vor- und Rücklauf fließendem Volumenstrom der durch den zweiten Wärmetauscher fließende Volumenstrom einem momentanen Wärmebedarf auf der Sekundärseite des zweiten Wärmetauschers angepasst werden. Ist der hierfür primärseitig benötigte Volumenstrom durch den zweiten Wärmetauscher hindurch größer als der durch Vor- und Rücklauf fließende Volumenstrom, kann der überschüssige Volumenstrom durch den Pufferspeicher zurückströmen. Ist der benötigte Volumenstrom hingegen kleiner als der Volumenstrom durch Vor- und Rücklauf, so kann der nicht benötigte Volumenstrom durch den Pufferspeicher hindurch am zweiten Wärmetauscher vorbei fließen. Ein vom Vorlauf kommender heißer Volumenstrom strömt einem oberen, heißen Bereich des Pufferspeichers zu bzw. der Vorlauf mündet unmittelbar in den oberen, heißen Bereich des Pufferspeichers. Dem Vor- und/oder Rücklauf ist dabei vorzugsweise eine dritte Pumpe und/oder ein regelbares Ventil zugeordnet, wodurch ein durch den Vor- und Rücklauf strömender Volumenstrom eingestellt und damit vorgegebenen werden kann. Primärseitig durch den ersten und/oder zweiten Wärmetauscher hindurch tretende Volumenströme an Wärmeträgermedium werden aus dem heißen Bereich des Pufferspeichers entnommen. Zur Regelung der durch den ersten bzw. zweiten Wärmetauscher hindurchtretenden Volumenströme können beispielsweise den Wärmetauschern jeweils zugeordnete, bevorzugt regelbare Pumpen vorgesehen sein, welche die entsprechenden Volumenströme aus dem heißen Bereich des Pufferspeichers fördern.

Mit der erfindungsgemäßen Vorrichtung lässt sich ein Durchflussprinzip verwirklichen, das aufgrund einer lediglich im oberen, heißen Bereich des Pufferspeichers stattfindenden ständigen Durchmischung und der ansonsten fakultativen Durchströmung von Pufferspeicher, erstem Wärmetauscher und zweitem Wärmetauscher durch
(WT2 UND/ODER PU) ODER (WT1 UND ((WT2 UND/ODER PU))
mit erstem Wärmetauscher WT1, zweitem Wärmetauscher WT2 und Pufferspeicher PU beschreibbar ist, wobei sich durch die Durchströmungsalternativen WT2 oder alternativ PU oder alternativ WT2 UND PU oder alternativ WT1 UND WT2 oder alternativ WT1 UND PU oder alternativ WT1 UND WT2 UND PU insgesamt sechs Freiheitsgrade bei Auslegung und Betrieb ergeben.

Vorteile der Erfindung gegenüber dem Stand der Technik ergeben sich unter anderem dadurch, dass durch die fakultative Durchströmung von Pufferspeicher, erstem Wärmetauscher und zweitem Wärmetauscher eine Mehrzahl zusätzlicher Freiheitsgrade bei der Ausgestaltung und Auslegung einer Vorrichtung zur Wärmeversorgung von Gebäuden geschaffen wird, dank welcher Freiheitsgrade die gewünschten, mit der Lösung der gestellten Aufgabe verbundenen Vorteile, nämlich eine niedrige Rücklauftemperatur sicherzustellen sowie eine Temperaturschichtung im Pufferspeicher aufrecht zu erhalten, erreicht werden können. Indem der Pufferspeicher nicht unmittelbar vollständig durchströmt und durchmischt wird, kann beispielsweise durch entsprechende Wahl von wärmebedarfsabhängigen Zirkulationsgeschwindigkeiten in Verbrauchs-und/oder Heizkreisläufen eine Durchmischung des Pufferspeichers besonders wirkungsvoll verhindert und eine besonders gute Trennung bzw. Schichtung von Temperaturstufen im Pufferspeicher bei gleichzeitig niedriger Rücklauftemperatur sichergestellt werden.

Bevorzugt wird ein aus dem ersten Wärmetauscher austretender Volumenstrom einem vom Vorlauf kommenden heißen Volumenstrom beigemengt und gemeinsam mit diesem dem heißen Bereich des Pufferspeichers zugeführt. Hierdurch kann im oberen, heißen Bereich des Pufferspeichers ein Temperaturniveau eingestellt werden, das unter der Vorlauftemperatur liegt. Dadurch können durch Wärmeleitung, Wärmeübergang und Strahlung auftretende Verluste des Pufferspeichers im Vergleich zu einem Pufferspeicher, in dessen heißem Bereich Vorlauftemperatur herrscht, verringert werden.

Eine besonders vorteilhafte Ausgestaltung der Erfindung sieht vor, dass der aus dem zweiten Wärmetauscher austretende Volumenstrom:
- sofern dieser kleiner ist als der vom Vorlauf kommende heiße Volumenstrom, dem zum Rücklauf strömenden kalten Volumenstrom beigemengt wird, so dass ein sich aus der Differenz zwischen dem vom Vorlauf kommenden heißen Volumenstrom und dem aus dem zweiten Wärmetauscher austretenden kalten Volumenstrom ergebender verbleibender Volumenstrom durch den parallel zum zweiten Wärmetauscher angeordneten Pufferspeicher vom heißen zum kalten Bereich fließt und den Pufferspeicher dabei durch Zufuhr heißen Wärmeträgermediums und gleichzeitiger Abgabe kalten Wärmeträgermediums auflädt,
   oder
- sofern dieser größer ist als der vom Vorlauf kommende heiße Volumenstrom, von dem zum Rücklauf strömenden kalten Volumenstrom abgezweigt wird, so dass ein sich aus der Differenz zwischen dem vom Vorlauf kommenden heißen Volumenstrom und dem aus dem zweiten Wärmetauscher austretenden kalten Volumenstrom ergebender verbleibender Volumenstrom durch den parallel zum zweiten Wärmetauscher angeordneten Pufferspeicher vom kalten zum heißen Bereich fließt und den Pufferspeicher dabei entlädt.

Gemäß einer besonders bevorzugten Ausgestaltung ist ein in den Primärkreislauf eingebundener und von dem Wärmeträgermedium durchströmter Heizkreis zur Beheizung von Räumen vorgesehen. Eine Beheizung von Räumen erfolgt so mittels des in den Primärkreislauf eingebundenen und von dem Wärmeträgermedium durchströmten Heizkreises, welcher beispielsweise Radiatoren und/oder eine Fußbodenheizung umfassen kann. Die Möglichkeit einer einfach zu verwirklichenden zusätzlichen Beheizung von Räumen bei gleichzeitiger Sicherstellung niedriger Rücklauftemperaturen im Primärkreislauf ergibt sich unmittelbar aus der erfindungsgemäßen Ausgestaltung der Vorrichtung zur Wärmeversorgung von Gebäuden mit dem wenigstens als zweieinhalbstufig bezeichenbaren Durchflussprinzip.

Vorzugsweise wird ein Volumenstrom an Wärmeträgermedium für den Heizkreis dem Pufferspeicher aus dessen oberem, heißen Bereich und/oder aus dessen mittlerem, warmen Bereich entnommen und nach Durchlaufen des Heizkreises und dadurch erfolgter Abkühlung einem unterhalb desjenigen Bereichs, aus dem die Entnahme stattgefunden hat, liegenden Bereich des Pufferspeichers wieder zugeführt. Die Beheizung von Räumen erfolgt hierbei durch eine direkte Entnahme von Wärmeträgermedium vorzugsweise aus dem heißen und/oder warmen Bereich des Pufferspeichers auf geeignetem erstem Temperaturniveau und Rückführung des Wärmeträgermediums in den warmen Bereich des Pufferspeichers auf einem zweiten, gegenüber dem ersten Temperaturniveau niedrigeren Temperaturniveau. Insbesondere die Verwendung eines im Primärkreislauf angeordneten Pufferspeichers, in dem geschichtet unterschiedliche Temperaturniveaus herrschen, erlaubt auf besonders einfache Art und Weise eine Anbindung eines Heizkreislaufs in den Primärkreislauf.

Eine vorteilhafte Ausgestaltung der Erfindung sieht vor, dass der zweite Verbrauchskreislauf in den ersten Verbrauchskreislauf mündet. Beispielsweise kann es sich bei dem ersten Verbrauchskreislauf um einen Verbrauchskreislauf zur Warmwasserzirkulation und bei dem zweiten Verbrauchskreislauf um einen Verbrauchskreislauf zur Frischwassererwärmung handeln.

Eine besonders vorteilhafte Ausgestaltung der Erfindung sieht einen zwischen Wärmequelle und Primärkreislauf angeordneten Sekundärkreislauf vor, in dem ein zweites Wärmeträgermedium zirkuliert. Hierbei kann die von der Wärmequelle zur Verfügung gestellte Wärme mittels eines im Sekundärkreislauf entfernt von der Wärmequelle und im Primärkreislauf zwischen Rück- und Vorlauf angeordneten dritten Wärmetauschers vom Sekundärkreislauf an den Primärkreislauf abgegeben und von diesem wenigstens zum Teil an die Verbrauchskreisläufe weitergegeben werden. Hierdurch können beispielsweise Fernwärme und/oder an entfernten Aufstellungsorten angeordnete regenerative Energiequellen als Wärmequellen zum Einsatz kommen. Darüber hinaus erlaubt die Ausgestaltung mit Sekundärkreislauf eine besonders einfache Einbindung mehrerer alternativ oder gleichzeitig nutzbarer Wärmequellen.

Bevorzugt sind wenigstens für die in den Pufferspeicher mit verschiedenen Temperaturen eintretenden Volumenströme Radialdiffusoren in unterschiedlich warmen Bereichen des Pufferspeichers angeordnet, so dass jeder Volumenstrom in einem seiner Temperatur entsprechenden Bereich durch einen Radialdiffusor in den Pufferspeicher eintritt. Radialdiffusoren weisen den Vorteil auf, dass ein durch sie hindurch in einen Pufferspeicher eintretender Volumenstrom nur geringste Turbulenzen verursacht, so dass eine Temperaturschichtung bestmöglich eingestellt und aufrechterhalten wird.

Alternativ oder zusätzlich kann der Pufferspeicher wenigstens zwei über eine Verbindungsleitung miteinander kommunizierende Behälter umfassen, zur Aufrechterhaltung und Sicherstellung einer Pufferspeicherschichtung in kalten, warmen und heißen Bereich mit unterschiedlichen Temperaturniveaus. Sind beispielsweise zwei Behälter vorgesehen, von denen der erste einen kalten, unteren Bereich des Pufferspeichers umfasst und der zweite einen oberen, heißen Bereich des Pufferspeichers umfasst und von denen der erste mit seinem oberen Bereich über eine Verbindungsleitung mit einem unteren Bereich des zweiten verbunden ist, stellt sich im Gravitationsfeld der Erde im ersten Behälter eine Temperaturschichtung kalt - warm ein, wohingegen sich im zweiten Behälter eine Temperaturschichtung warm - heiß einstellt.

Die vorliegende Erfindung umfasst nicht nur eine Vorrichtung, sondern gleichermaßen ein Verfahren zur Wärmeversorgung von Gebäuden mit den Merkmalen des Anspruchs 11, bei dem ein mit einem Vorlauf und einem Rücklauf mit einer Wärmequelle verbundener Primärkreislauf von einem Wärmeträgermedium durchströmt wird. In dem Primärkreislauf befinden sich wenigstens ein Pufferspeicher, ein erster Wärmetauscher und ein zweiter Wärmetauscher. Die Wärmetauscher werden primärseitig von dem Wärmeträgermedium durchströmt. Zudem ist der erste Wärmetauscher sekundärseitig mit einem ersten Verbrauchskreislauf verbunden, während der zweite Wärmetauscher sekundärseitig mit einem zweiten Verbrauchskreislauf verbunden ist. Der zweite Wärmetauscher ist parallel zum Pufferspeicher angeordnet. Ein mit einem kalten Bereich des Pufferspeichers verbundener Zu- und Ablauf, ein Ablauf des zweiten Wärmetauschers und der Rücklauf münden ineinander. Bei dem erfindungsgemäßen Verfahren ist vorgesehen, dass ein vom Vorlauf kommender heißer Volumenstrom einem heißen Bereich des Pufferspeichers zuströmt und primärseitig durch den ersten Wärmetauscher und/oder zweiten Wärmetauscher hindurch tretende Volumenströme aus dem heißen Bereich des Pufferspeichers entnommen werden.

Die Erfindung wird nachfolgend anhand von in den Zeichnungen dargestellten Ausführungsbeispielen näher erläutert. Darin bezeichnen gleiche Bezugszeichen gleiche oder gleich wirkende Elemente. Es ist für einen Fachmann vorstellbar, dass Abwandlungen oder Änderungen der Erfindung von den bevorzugten Ausführungsbeispielen gemacht werden können, ohne dabei den Schutzbereich der in den Ansprüchen geschützten Gegenstände zu verlassen.

Es zeigen:
Fig. 1 eine schematische Darstellung des Aufbaus einer erfindungsgemäßen Vorrichtung zur Wärmeversorgung von Gebäuden gemäß eines ersten Ausführungsbeispiels; und
Fig. 2 eine schematische Darstellung des Aufbaus einer erfindungsgemäßen Vorrichtung zur Wärmeversorgung von Gebäuden gemäß eines zweiten Ausführungsbeispiels.

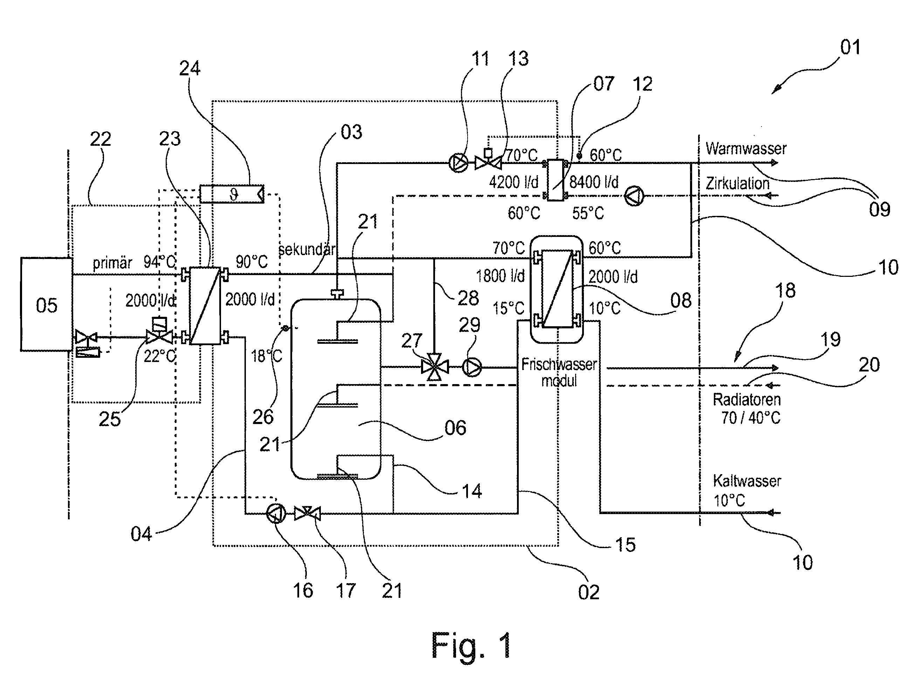

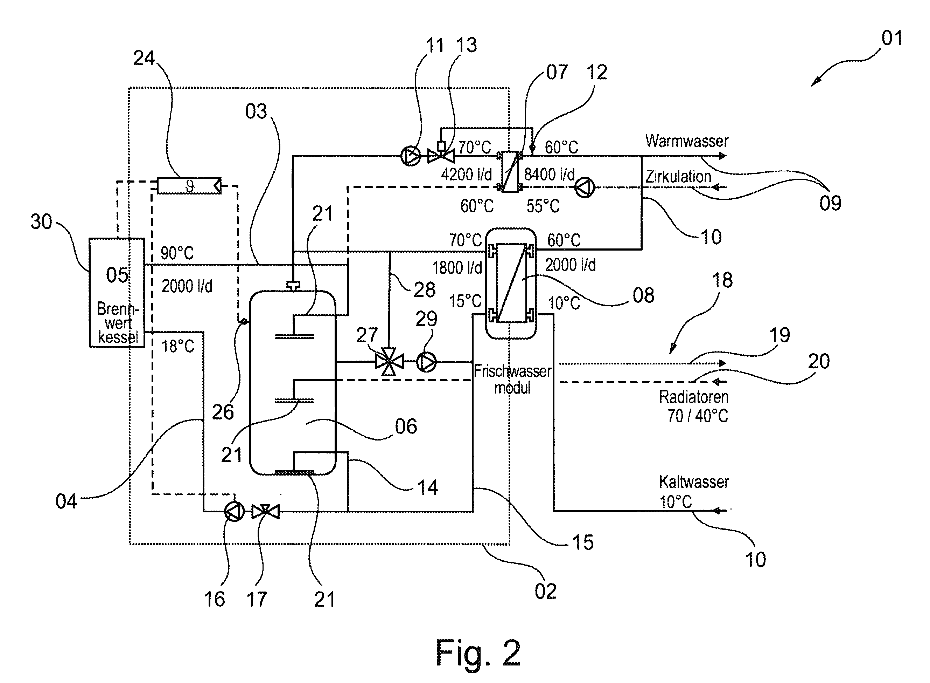

Eine in den Fig. 1 und 2 ganz oder in Teilen dargestellte, sowohl zur Trinkwassererwärmung, als auch zur Beheizung von Räumen geeignete Vorrichtung 01 zur Wärmeversorgung von Gebäuden hat einen von einem Wärmeträgermedium durchströmten Primärkreislauf 02 mit einem Vorlauf 03 und einem Rücklauf 04. Vorlauf 03 und Rücklauf 04 sind indirekt oder direkt mit einer Wärmequelle 05 verbunden.

In dem Primärkreislauf 02 ist wenigstens ein mit dem Wärmeträgermedium befüllter und durchströmter Pufferspeicher 06 zur Zwischenspeicherung von durch den Primärkreislauf 02 von der Wärmequelle 05 aufgenommener Wärme vorgesehen. In dem Primärkreislauf 02 sind ferner ein erster Wärmetauscher 07 und ein zweiter Wärmetauscher 08 angeordnet. Primärseitig sind der erste Wärmetauscher 07 und der zweite Wärmetauscher 08 von dem Wärmeträgermedium durchströmt. Sekundärseitig sind der erste Wärmetauscher 07 und der zweite Wärmetauscher 08 von zu erwärmendem Trinkwasser durchströmt. Der erste Wärmetauscher ist hierbei sekundärseitig für einen als Warmwasserzirkulation ausgelegten ersten Verbrauchskreislauf 09 vorgesehen. Der zweite Wärmetauscher ist sekundärseitig für einen als Frischwassererwärmung ausgelegten zweiten Verbrauchskreislauf 10 vorgesehen. Der zweite Verbrauchskreislauf 10 mündet in den ersten Verbrauchskreislauf 09, um eine dort auftretende Warmwasserentnahme ausgleichen zu können.

Dem ersten Verbrauchskreislauf 09 und dem zweiten Verbrauchskreislauf 10 wird wenigstens ein Teil der von der Wärmequelle 05 zur Verfügung gestellten und vom Primärkreislauf 02 aufgenommenen Wärme zugeführt. Der Pufferspeicher 06 gleicht eine gegebenenfalls vorherrschende Differenz zwischen von dem Primärkreislauf 02 aufgenommener und zumindest momentan an die Verbrauchskreisläufe 09, 10 abgegebener Wärme bei gleich bleibender Wärmeaufnahme durch den Primärkreislauf 02 von der Wärmequelle 05 aus.

Dem ersten Wärmetauscher 07 kann eine Pumpe 11 sowie alternativ oder zusätzlich ein gegebenenfalls durch einen sekundärseitig des ersten Wärmetauschers 07 angeordneten Temperaturregler 12 geregeltes Zweiwegeventil 13 zugeordnet sein. Bei der Pumpe 11 handelt es sich um die eingangs beschriebene, dem ersten Wärmetauscher 07 zugeordnete erste Pumpe 11. Dem zweiten Wärmetauscher 08 können ebenfalls eigene gleiche oder ähnliche Mittel zugeordnet sein. Dadurch können die durch den ersten Wärmetauscher 07 sowie gegebenenfalls durch den zweiten Wärmetauscher 08 primärseitig hindurchströmenden Volumenströme geregelt werden.

Der zweite Wärmetauscher 08 ist parallel zum Pufferspeicher 06 angeordnet. Ein mit einem kalten Bereich des Pufferspeichers 06 verbundener Zu- und Ablauf 14, ein Ablauf 15 des zweiten Wärmetauschers 08 und der Rücklauf 04 münden ineinander. Hierdurch kann bei vorgegebenem, durch den Vorlauf 03 und den Rücklauf 04 fließendem Volumenstrom der durch den zweiten Wärmetauscher 08 fließende Volumenstrom einem momentanen Wärmebedarf sekundärseitig des zweiten Wärmetauschers 08 angepasst werden. Beispielsweise tritt bei hoher Warmwasserzapfung ein hoher Wärmebedarf für die Frischwassererwärmung sekundärseitig des zweiten Wärmetauschers 08 auf, entsprechend einem hohen erforderlichen Volumenstrom primärseitig durch den zweiten Wärmetauscher 08 hindurch.

Ist der primärseitig benötigte Volumenstrom durch den zweiten Wärmetauscher 08 hindurch größer als der durch Vorlauf 03 und Rücklauf 04 fließende Volumenstrom, kann der überschüssige Volumenstrom durch den Pufferspeicher 06 zurückströmen. Hierbei ist der aus dem zweiten Wärmetauscher 08 austretende Volumenstrom größer als der vom Vorlauf 03 kommende heiße Volumenstrom und der durch den Rücklauf 04 abgeführte, kalte Volumenstrom. Deshalb findet eine Abzweigung des aus dem zweiten Wärmetauscher 08 austretenden Volumenstromes von dem zum Rücklauf 04 strömenden kalten Volumenstrom durch den mit dem kalten Bereich des Pufferspeichers 06 verbundenen Zu- und Ablauf 14 statt. Hierdurch fließt ein sich aus der Differenz zwischen dem vom Vorlauf 03 kommenden heißen Volumenstrom und dem aus dem zweiten Wärmetauscher 08 austretenden kalten Volumenstrom ergebender verbleibender Volumenstrom durch den parallel zum zweiten Wärmetauscher 08 angeordneten Pufferspeicher 06 vom kalten zum heißen Bereich. Der sekundärseitig des zweiten Wärmetauschers 08 benötigte zusätzliche heiße Volumenstrom wird hierbei gleichzeitig dem oberen, heißen Bereich des Pufferspeichers 06 entnommen, so dass der Pufferspeicher 06 durch Zufuhr kalten Wärmeträgermediums in den unteren, kalten Bereich und Entnahme heißen Wärmeträgermediums vom oberen, heißen Bereich entladen wird.

Ist der benötigte Volumenstrom primärseitig durch den zweiten Wärmetauscher 08 hindurch hingegen kleiner als der Volumenstrom durch Vorlauf 03 und Rücklauf 04, beispielsweise weil eine nur geringe Warmwasserzapfung stattfindet, so wird der vom zweiten Wärmetauscher kommende kalte Volumenstrom dem zum Rücklauf 04 strömenden kalten Volumenstrom beigemengt. Hierbei fließt ein sich aus der Differenz zwischen dem vom Vorlauf 03 kommenden heißen Volumenstrom und dem aus dem zweiten Wärmetauscher 08 austretenden kalten Volumenstrom ergebender verbleibender Volumenstrom durch den parallel zum zweiten Wärmetauscher 08 angeordneten Pufferspeicher 06 vom heißen zum kalten Bereich. Dabei lädt sich der Pufferspeicher 06 durch Zufuhr heißen Wärmeträgermediums zum oberen, heißen Bereich unter gleichzeitiger Abgabe kalten Wärmeträgermediums aus dem unteren, kalten Bereich auf.

Halten sich der durch Vorlauf 03 und Rücklauf 04 strömende Volumenstrom und der primärseitig des zweiten Wärmetauschers 08 erforderliche Volumenstrom die Waage, findet kein Austausch von Wärmeträgermedium über die ganze Höhe des Pufferspeichers 06 hinweg statt.

Findet hingegen keine Warmwasserzapfung statt, tritt sekundärseitig des zweiten Wärmetauschers 08 kein Wärmebedarf auf und es wird kein primärseitig durch den zweiten Wärmetauscher 08 hindurch tretender Volumenstrom benötigt. In diesem Fall kann der nicht benötigte Volumenstrom durch den Pufferspeicher 06 hindurch am zweiten Wärmetauscher 08 vorbei fließen. Dabei findet eine starke Aufladung des Pufferspeichers 06 durch Zufluss des vom Vorlauf 04 kommenden heiße Volumenstroms in den oberen, heißen Bereich des Pufferspeichers 06 und gleichzeitige Entnahme eines identischen, durch den Rücklauf 04 zurückströmenden kalten Volumenstroms aus dem unteren, kalten Bereich des Pufferspeichers 06 statt.

Der vom Vorlauf 03 kommende, heiße Volumenstrom strömt einem oberen, heißen Bereich des Pufferspeichers 06 zu, wobei der Vorlauf unmittelbar in den oberen, heißen Bereich des Pufferspeichers mündet. Dem Vorlauf 03 und/oder Rücklauf 04 kann eine Pumpe 16 sowie alternativ oder zusätzlich ein regelbares Ventil 17 zugeordnet sein, wodurch ein durch den Vorlauf 03 und den Rücklauf 04 strömender Volumenstrom eingestellt und damit vorgegebenen werden kann. Bei der Pumpe 16 handelt es sich dabei um die Eingangs erwähnte, dem Vorlauf 03 und dem Rücklauf 04 zugeordnete dritte Pumpe 16. Ein aus dem ersten Wärmetauscher 07 austretender Volumenstrom wird dem vom Vorlauf 03 kommenden heißen Volumenstrom vorzugsweise beigemengt und gemeinsam mit diesem dem heißen Bereich des Pufferspeichers 06 zugeführt.

Primärseitig durch den ersten Wärmetauscher 07 und/oder zweiten Wärmetauscher 08 hindurch tretende Volumenströme werden aus dem heißen Bereich des Pufferspeichers 06 entnommen.

In den Primärkreislauf 02 kann mindestens ein und von dem Wärmeträgermedium durchströmter und zur Beheizung von Räumen vorgesehener Heizkreis 18 eingebunden sein. Der Heizkreis 18 besteht aus Heizungsvorlauf 19 und Heizungsrücklauf 20 sowie dazwischen angeordneten Radiatoren und/oder Heizschlaufen z.B. einer Fußbodenheizung. Ein Volumenstrom an Wärmeträgermedium für den Heizkreis 18 wird dem Pufferspeicher 06 vorzugsweise aus dessen heißem Bereich entnommen und nach Durchlaufen des Heizkreises 18 und dadurch erfolgter Abkühlung einem unterhalb des heißen Bereichs liegenden warmen Bereich des Pufferspeichers 06 wieder zugeführt.

In dem Pufferspeicher 06 können Radialdiffusoren 21 für die mit verschiedenen Temperaturen eintretenden Volumenströme in unterschiedlich warmen Bereichen des Pufferspeichers 06 angeordnet sein. Hierdurch kann jeder Volumenstrom in einem seiner Temperatur entsprechenden Bereich in den Pufferspeicher eintreten.

Bei der in Fig. 1 dargestellten Vorrichtung 01 zur Wärmeversorgung von Gebäuden sind Vorlauf 03 und Rücklauf 04 des Primärkreislaufs 02 indirekt mit einer nicht näher dargestellten Wärmequelle verbunden. Hierzu ist zwischen Wärmequelle und Primärkreislauf 02 ein Sekundärkreislauf 22 vorgesehen, in dem ein zweites Wärmeträgermedium zirkuliert. Bei dem Sekundärkreislauf 22 kann es sich beispielsweise um ein Fernwärmenetz handeln. Die von der Wärmequelle zur Verfügung gestellte Wärme wird hierbei mittels eines im Sekundärkreislauf 22 entfernt von der Wärmequelle 05 und im Primärkreislauf 02 zwischen Rücklauf 04 und Vorlauf 03 angeordneten dritten Wärmetauschers 23 vom Sekundärkreislauf 22 an den Primärkreislauf 02 abgegeben und von diesem wenigstens zum Teil an die Verbrauchskreisläufe 09, 10 weitergegeben. Ein Temperaturregler 24 kann vorgesehen sein, um einen im Sekundärkreis 22 angeordneten Durchflussmengenbegrenzer 25 zu regeln und so die im Sekundärkreislauf 22 transportierte Wärme an den tatsächlichen Wärmebedarf des Primärkreislaufs 02 anzupassen. Hierdurch kann dem Umstand Rechnung getragen werden, dass bei lange anhaltender geringer Wärmeentnahme aus dem Primärkreislauf 02 der Pufferspeicher 06 früher oder später voll ist und keine zusätzliche Wärme mehr aufnehmen kann. Durch eine Drosselung der Durchflussmenge auf der Primärseite des dritten Wärmetauschers 23 kann die Wärmezufuhr begrenzt oder eingestellt werden, so dass Verluste durch unnötigen Wärmetransport im Sekundärkreislauf 22 verhindert werden können.

Bei der in Fig. 1 dargestellten Vorrichtung 01 zur Wärmeversorgung von Gebäuden erfolgt eine Nachheizung des Pufferspeichers 06 durch den beispielsweise als Fernwärmeanschluss ausgebildeten Sekundärkreislauf 22, sobald ein im oberen, heißen Bereich des Pufferspeichers 06 angeordneter Temperatursensor 26 des Temperaturreglers 24 einen Sollwert von beispielsweise 70°C unterschreitet. Ein Regelgerät des Temperaturreglers 24, beispielsweise ein Zwei-Punkt-Regler, öffnet den beispielsweise als Magnetventil ausgebildeten Durchflussmengenbegrenzer 25 auf der Primärseite des dritten Wärmetauschers 23 im Sekundärkreislauf 22. Gleichzeitig kann die Pumpe 16 im Primärkreislauf 02 auf der Sekundärseite des dritten Wärmetauschers 23 eingeschaltet werden. Der Volumenstrom auf der Primärseite des dritten Wärmetauschers 23 ist durch die einstellbare Mengenbegrenzung des Fernwärmeanschlusses vorgegeben. Um primärseitig am Ausgang des dritten Wärmetauschers 23 im Sekundärkreislauf 22 niedrige Temperaturen zu erhalten sollten die Volumenströme auf der Primär- und Sekundärseite des dritten Wärmetauschers 23 gleich groß sein. Der durch Vorlauf 03 und Rücklauf 04 des Primärkreislaufs 02 sekundärseitig durch den dritten Wärmetauscher 23 fließende Volumenstrom kann durch die Pumpe 16 und/oder durch das regelbare Ventil 17 eingestellt werden. Bei der Beladung des Pufferspeichers 06 durch den mit einer Temperatur von etwa 90°C aus dem Vorlauf 03 austretenden Volumenstrom erfolgt eine Durchmischung im oberen, heißen Bereich des Pufferspeichers 06, da sich das aus dem Vorlauf 03 mit einer Temperatur von etwa 90°C in den Pufferspeicher 06 eintretende Wasser mit dem Wasser im Pufferspeicher 06 durchmischt, welches eine Temperatur von etwa 60°C aufweist. Gleichzeitig wird ein durch den ersten Wärmetauscher 07 und/oder durch den zweiten Wärmetauscher 08 fließender Volumenstrom unmittelbar dem oberen, heißen Bereich des Pufferspeichers 06 entnommen. Das Erwärmen der oberen Zone des Pufferspeichers 06 erfolgt im Durchmischungsprinzip von etwa 60°C auf 70°C. Alternativ kann der Vorlauf 03 auch vor dem Eintritt in den Pufferspeicher 06 mittels einer Beimischschaltung auf die gewünschte Temperatur von etwa 70°C gemischt werden.

Eine möglichst gleichmäßige, geringe Durchmischung innerhalb der geschichteten Temperaturbereiche des Pufferspeichers 06 kann durch eine Beladeeinrichtung erreicht werden. Diese umfasst beispielsweise in unterschiedlich warmen Bereichen des Pufferspeichers 06 angeordnete Radialdiffusoren 21 für die mit unterschiedlichen Temperaturen eintretenden Volumenströme. Ein aus einem Radialdiffusor 21 austretender Volumenstrom wird gleichmäßig über dessen z.B. am Umfang liegenden Austrittsquerschnitt verteilt, wodurch durch Geschwindigkeitsunterschiede in Austrittsrichtung verursachte Turbulenzen vermieden werden. Die Nachheizung des Pufferspeichers 06 wird beendet, sobald der im oberen Bereich des Pufferspeichers 06 angeordnete Temperatursensor 26 einen Sollwert von z.B. 70°C zuzüglich einer Regeldifferenz von z.B. 2K überschreitet.

Kaltes Frischwasser, welches aus einem beispielsweise öffentlichen Trinkwassernetz entnommen wird, wird mittels des sekundärseitig mit dem zweiten Wärmetauscher 08 verbundenen und zur Frischwassererwärmung vorgesehenen zweiten Verbrauchskreislaufs 10 auf eine gewünschte Temperatur von beispielsweise 60°C aufgeheizt. Der zweite Wärmetauscher 08 kann hierbei Bestandteil eines so genannten Frischwassermoduls sein. Solche Frischwassermodule umfassen neben einem oder mehreren Wärmetauschern 08 zusätzlich wenigstens eine Pumpe und/oder ein Regelventil und sind fertig konfiguriert erhältlich. Alternativ zum Frischwassermodul kann auch ein Speicherladesystem verwendet werden. Der dazu gehörige Trinkwasserspeicher sollte in diesem Fall eine geringere Größe als der Pufferspeicher aufweisen.

Zur Warmwasserzirkulation dient der sekundärseitig mit dem ersten Wärmetauscher 07 verbundene erste Verbrauchskreislauf 09. In dem ersten Verbrauchskreislauf 09 wird Trinkwasser, welches bereits die Frischwassererwärmung durchlaufen hat, in einem beispielsweise gebäudeeigenen Warmwasserzirkulationsnetz ständig umgewälzt und von 55°C auf eine eingestellte Temperatur von ebenfalls 60°C erwärmt, um bei einsetzender Warmwasserzapfung von Beginn an Warmwasser zur Verfügung stellen zu können. Der erste Wärmetauscher 07 wird sekundärseitig vorzugsweise stets mit hoher Geschwindigkeit durchströmt, so dass eine Verkalkungsgefahr vermindert wird. Der primärseitig durch den ersten Wärmetauscher 07 fließende Volumenstrom wird beispielsweise durch die drehzahlvariabel regelbare erste Pumpe 11 oder alternativ oder zusätzlich durch das regelbare Ventil 13 ohne Hilfsenergie so geregelt, dass die Austrittstemperatur auf der mit dem ersten Verbrauchskreislauf 09 verbundenen Sekundärseite des ersten Wärmetauschers 07 60°C beträgt.

Der durch den ersten Wärmetauscher 07 hindurchgetretene Volumenstrom wird vorzugsweise dem vom Vorlauf 03 kommenden, heißen Volumenstrom zugemischt noch bevor dieser in den Pufferspeicher 06 eintritt. Dadurch wird neben einem geringeren heißen Temperaturniveau im Pufferspeicher 06, welches im Vergleich zu einem höheren heißen Temperaturniveau geringere Wärmeverluste zur Folge hat, zusätzlich eine geringere Durchmischung erreicht, als dies bei zwei unabhängig voneinander in den Pufferspeicher 06 eintretenden Volumenströmen der Fall wäre. Eine bessere Temperaturschichtung im Pufferspeicher 06 ist die Folge.

Bei Schwachlastbetrieb, bei dem eine geringe Warmwasserzapfung und ein konstanter Wärmebedarf für die Warmwasserzirkulation vorherrscht, hat der aus dem oberen, heißen Bereich des Pufferspeichers 06 mit etwa 70°C entnommene Volumenstrom nachdem er durch den ersten Wärmetauscher 07 hindurch getreten ist noch eine Temperatur von 60°C. Hierdurch ergibt sich eine Eintrittstemperatur des sich aus Volumenstrom des Vorlaufs 03 und Volumenstrom durch den ersten Wärmetauscher 07 zusammensetzenden Volumenstroms in den Pufferspeicher 06, welche bei Schwachlastbetrieb eine kontinuierliche Beladung des Pufferspeichers 06 sicherstellt.

In Zeiten hohen Warmwasserbedarfs, in denen eine Warmwasserzapfung stattfindet, wird ein hoher Volumenstrom an Wärmeträgermedium aus dem oberen, heißen Bereich des Pufferspeichers 06 entnommen, der primärseitig durch den zweiten Wärmetauscher 08 strömt. Dadurch wird der Pufferspeicher 06 entladen.

Zum besseren Verständnis sind nachfolgend beispielhaft zu erwartende Volumen-und Wärmeströme für ein Wohngebäude mit zwanzig Wohneinheiten außerhalb der Heizperiode, typischerweise im Sommer, wo keine Beheizung von Räumen stattfindet, angegeben.

| | | |
|---|---|---|
| Volumenstrom Sekundärkreis: | primär (94°C/22°C): | 2,0 m³/d |
| | sekundär (18°C/90°C): | 2,0 m³/d |
| | Pufferspeicherbeladung: | 162 kWh/d |
| Volumenstrom erster Wärmetauscher: | primär (70°C/60°C): | 4,2 m³/d |
| | sekundär (55°C/60°C): | 8,4 m³/d |
| | Pufferspeicherentladung: | 48 kWh/d |
| Volumenstrom zweiter Wärmetauscher: | primär (70°C/15°C): | 1,8 m³/d |
| | sekundär (10°C/60°C): | 2,0 m³/d |
| | Pufferspeicherentladung: | 114kWh/d |

Bei diesem Zahlenbeispiel sind Wärmeverluste des Pufferspeichers, der Rohrleitungen und sonstiger Komponenten der Einfachheit halber nicht berücksichtigt.

Zum Aufheizen des oberen, heißen Bereichs des Pufferspeichers 06 von beispielsweise 60°C auf den Sollwert von 70°C ist vorgesehen, den aus dem ersten Wärmetauscher 07 mit 60 °C austretenden Volumenstrom mit dem vom Vorlauf 03 kommenden, 90°C heißen Volumenstrom zu vermischen und den so erhaltenen Volumenstrom beispielsweise durch den im oberen, heißen Bereich des Pufferspeichers 06 angeordneten Radialdiffusor 21 dem heißen Bereich des Pufferspeichers 06 zuzuführen. Um den Wärmebedarf der Verbrauchskreisläufe 09, 10 gemäß obigem Zahlenbeispiel zu decken ist ein durch Rücklauf 04 und Vorlauf 03 fließender Volumenstrom von (4,2+1,8)/3 m3/d ₌ 2,0 m3/d erforderlich. Falls der im ersten Verbrauchskreislauf 09 sekundärseitig durch den ersten Wärmetauscher 07 fließende Volumenstrom der Warmwasserzirkulation höher ist als in obigem Zahlenbeispiel dargestellt, kann die Warmwasserzirkulation in Zeiten hohen Warmwasserbedarfs über eine Zeitschaltuhr oder eine Regeleinrichtung beispielsweise bis zu acht Stunden am Tag abgeschaltet werden.

Die Wärmeversorgung eines oder mehrerer Heizkreise 18 kann direkt aus dem Pufferspeicher 06 erfolgen. Hierbei sind die Auslegungstemperatur des Heizkreises 18 und die in den unterschiedlichen Bereichen im Pufferspeicher 06 herrschenden Temperaturen zu berücksichtigen. Im Zahlenbeispiel darf die Auslegungstemperatur 70°C nicht überschreiten. Die Temperatur des Heizungsvorlaufs 19 kann über zwei Dreiwegemischer oder einen Mehrwegemischer 27 geregelt werden. Bei dem Mehrwegemischer 27 wird der aus dem mittleren, warmen Bereich des Pufferspeichers 06 entnommene Heizungsvorlauf 19 mit dem Heizungsrücklauf 20 auf die gewünschte Temperatur gemischt. Dies ist insbesondere vorteilhaft, da im Pufferspeicher 06 der auch als Übergangsbereich zwischen unterem, kalten Bereich und oberem, heißen Bereich bezeichenbare mittlere, warme Bereich genutzt und die Temperatur entsprechend der Temperatur des Heizungsrücklaufs 20 abgesenkt wird. Ist die Temperatur im mittleren Bereich des Pufferspeichers 06 nicht mehr ausreichend, so kann über den dritten Beimischanschluss 28 des Mehrwegemischers 27 70°C heißes Wärmeträgermedium aus dem oberen, heißen Bereich des Pufferspeichers 06 entnommen und dem Heizungsvorlauf 19 beigemischt werden. Im Heizungszulauf 19 ist nach dem Mehrwegemischer 27 eine Pumpe 29 angeordnet, so dass die Zusammensetzung des von der Pumpe 29 geförderten Volumenstroms durch den Mehrwegemischer 27 geregelt werden kann. Liegt die Auslegungstemperatur des Heizkreises 18 über 70°C so kann eine Anbindung unmittelbar am Vorlauf 03 erfolgen, wo der von dort kommende Volumenstrom eine Temperatur von 90°C aufweist. In diesem Fall kann die Pufferspeicherbeladung mit einer stetigen Regelung erfolgen.

Die erfindungsgemäße Vorrichtung 01 zur Wärmeversorgung von Gebäuden kann auch andere Wärmequellen 05 vorsehen, beispielsweise solche, deren Wirkungsgrad mit sinkenden Rücklauftemperaturen zunimmt. Solche Wärmequellen sind beispielsweise Brennwertgeräte bzw. -heizkessel, beispielsweise aufbauend auf einer Verbrennung von Öl, Gas oder Biomasse, oder Blockheizkraftwerke, ebenso solarthermische Kollektoren.

Bei der in Fig. 2 dargestellten Ausführungsvariante sind Vorlauf 03 und Rücklauf 04 des Primärkreislaufs 02 direkt mit der Wärmequelle 05 verbunden, so dass die Wärmequelle 05 in den Primärkreislauf 02 eingebunden ist. Bei der Wärmequelle 05 der in Fig. 2 dargestellten Vorrichtung 01 zur Wärmeversorgung von Gebäuden handelt es sich beispielsweise um einen Brennwertkessel 30. Die Nachheizung des Pufferspeichers 06 durch den Brennwertkessel 30 erfolgt, sobald der im oberen, heißen Bereich des Pufferspeichers 06 angeordnete Temperatursensor 26 des Temperaturreglers 24 einen Sollwert von beispielsweise 70°C unterschreitet. Ein mit dem Temperaturregler 24 verbundenes Regelgerät setzt den Brennwertkessel 30 daraufhin in Betrieb. Sobald der Brennwertkessel 30 eine Temperatur von 90°C erreicht hat, wird die Pumpe 16 eingeschaltet. Das regelbare Ventil 17 regelt bei eingeschalteter dritter Pumpe 16 den Volumenstrom durch Vorlauf 03 und Rücklauf 04. Ebenso kann eine drehzahlgeregelte Pumpe 16 eingesetzt werden. In diesem Fall kann auf das regelbare Ventil 17 verzichtet werden. Als Führungsgröße für den Volumenstrom durch Vorlauf 03 und Rücklauf 04 dient insbesondere bei der Verwendung eines Brennwertkessels 30 als Wärmequelle 05 die Vorlauftemperatur mit einem Sollwert von beispielsweise 90°C. Beim Brennwertkessel 30 kann auf einen modulierten Brenner verzichtet werden. Es kann ein kostengünstiges Gerät mit nur einer Laststufe eingesetzt werden.

Sowohl bei der in Fig. 1, als auch bei der in Fig. 2 dargestellten Vorrichtung 01 zur Wärmeversorgung von Gebäuden ermöglicht der Pufferspeicher 06, der bei Schwachlastbetrieb geladen und in Zeiten hohen Warmwasserbedarfs wieder entladen wird, eine Zwischenspeicherung der vom Primärkreislauf 02 aufgenommenen Wärme und eine Abgabe derselben zu einem gewünschten Zweck zu einem späteren Zeitpunkt. Bei der in Fig. 01 dargestellten Vorrichtung 01 zur Wärmeversorgung von Gebäuden gibt der Sekundärkreislauf 22 die Wärme an den Primärkreislauf 02 ab, wohingegen bei der in Fig. 2 dargestellten Vorrichtung 01 zur Wärmeversorgung von Gebäuden der Primärkreislauf 02 die Wärme direkt von der Wärmequelle 05 aufnimmt. Eine turbulenzarme Einströmung in den Pufferspeicher 06 kann durch zusätzliche Leitbleche und/oder Einbauten im Pufferspeicher 06, wie z.B. durch die dargestellten Radialdiffusoren 21 erhalten werden. Zusätzlich oder alternativ ist ein Pufferspeicher denkbar, welcher voneinander getrennte, durch Verbindungsleitungen kommunizierende Behälter umfasst. Jeder Behälter fasst dabei eine Partie unterschiedlichen Temperaturniveaus und/oder Temperaturbereichs des im Pufferspeicher 06 enthaltenen Wärmeträgermediums. Beispielsweise können zwei Behälter vorgesehen sein, in denen die Schichtungen kalt -warm bzw. warm - heiß vorherrschen. Ebenfalls denkbar sind drei in Serie angeordnete Behälter, welche durch zwischen benachbarten Behältern angeordnete Verbindungsleitungen miteinander kommunizieren, von denen jeder Behälter einen der Bereiche kalt - warm - heiß beherbergt.

Wichtig ist hervorzuheben, dass es sich zumindest bei dem im Primärkreislauf 02 zirkulierenden Wärmeträgermedium bevorzugt um Wasser handelt.

Mit der Erfindung erzielbare Vorteile sind unter anderem:
- Eine Verwendbarkeit einfacher, wartungsarmer Regelungskomponenten, welche ohne Hilfsenergie auskommen. Diese führen zu geringen Investitions- und Betriebskosten und schaffen eine hohe Betriebssicherheit.
- Der sekundärseitig für die Warmwasserzirkulation vorgesehene erste Wärmetauscher kann kontinuierlich für 24 h/d in Betrieb sein und wird auch primärseitig mit niedrigen Temperaturen betrieben. Dadurch besteht eine nur geringe Verkalkungsgefahr, da keine regelungsbedingten Temperaturspitzen vorherrschen und keine Stillstandszeiten auftreten.
- Der Pufferspeicher wird bei Schwachlast beispielsweise bei Nacht aufgeladen und bei Spitzenlast, bei welcher z.B. Zeiten hoher Warmwasserzapfung herrschen, wie etwa am Morgen, entladen.

Beispielsweise bei einer Verwendung von Fernwärme als Wärmequelle führt dies zu einer besseren Auslastung während der Nacht und zu einer Verringerung von Lastspitzen am Morgen.
- Eine mögliche Unterbrechung der Warmwasserzirkulation für beispielsweise acht Stunden während Zeiten hoher Warmwasserzapfung, was z.B. besonders einfach über eine Zeitschaltuhr geregelt werden kann, führt beispielsweise bei einer Verwendung von Fernwärme als Wärmequelle zu einer weiteren Verringerung von Lastspitzen am Morgen.
- Eine Legionellenschaltung ist nicht erforderlich, da keine Bevorratung von warmem Trinkwasser stattfindet.

Die Erfindung ist insbesondere im Bereich der Herstellung von Heizungsanlagen zur Wärmeversorgung von Gebäuden gewerblich anwendbar.

### Bezugszeichenliste

- 01: Vorrichtung zur Wärmeversorgung von Gebäuden
- 02: Primärkreislauf
- 03: Vorlauf
- 04: Rücklauf
- 05: Wärmequelle
- 06: Pufferspeicher
- 07: erster Wärmetauscher
- 08: zweiter Wärmetauscher
- 09: erster Verbrauchskreislauf
- 10: zweiter Verbrauchskreislauf
- 11: Pumpe
- 12: Temperaturregler
- 13: Zweiwegeventil
- 14: Zu- und Ablauf
- 15: Ablauf
- 16: Pumpe
- 17: Ventil
- 18: Heizkreis
- 19: Heizungsvorlauf
- 20: Heizungsrücklauf
- 21: Radialdiffusor
- 22: Sekundärkreislauf
- 23: dritter Wärmetauscher
- 24: Temperaturregler
- 25: Durchflussmengenbegrenzer
- 26: Temperatursensor
- 27: Mehrwegemischer
- 28: Beimischanschluss
- 29: Pumpe
- 30: Brennwertkessel

## Patentansprüche

1. Vorrichtung (01) zur Wärmeversorgung von Gebäuden, umfassend
- einen von einem Wärmeträgermedium durchströmbaren, mit einem Vorlauf (03) und einem Rücklauf (04) mit einer Wärmequelle (05) verbundenen Primärkreislauf (02),
- wobei in dem Primärkreislauf (02) wenigstens ein Pufferspeicher (06), sowie ein erster Wärmetauscher (07) und ein zweiter Wärmetauscher (08) angeordnet sind, und wobei der zweite Wärmetauscher (08) außerhalb des Pufferspeichers (06) angeordnet ist,
- welche Wärmetauscher (07, 08) primärseitig von dem Wärmeträgermedium durchströmbar sind, und von denen der erste Wärmetauscher (07) sekundärseitig mit einem ersten Verbrauchskreislauf (09) und der zweite Wärmetauscher (08) sekundärseitig mit einem zweiten Verbrauchskreislauf (10) verbunden ist,
- wobei der zweite Wärmetauscher (08) parallel zum Pufferspeicher (06) angeordnet ist und ein mit einem kalten Bereich des Pufferspeichers (06) verbundener Zu- und Ablauf (14), ein Ablauf (15) des zweiten Wärmetauschers (08) und der Rücklauf (04) ineinander münden,
- **dadurch gekennzeichnet, dass**
- der erste Wärmetauscher (07) außerhalb des Pufferspeichers (6) angeordnet ist,
- ein vom Vorlauf (03) kommender heißer Volumenstrom einem heißen Bereich des Pufferspeichers (06) zuströmbar ist und primärseitig durch den ersten Wärmetauscher (07) und zweiten Wärmetauscher (08) hindurch tretende Volumenströme aus dem heißen Bereich des Pufferspeichers (06) entnehmbar sind.

2. Vorrichtung nach Anspruch 1, **dadurch gekennzeichnet, dass** ein aus dem ersten Wärmetauscher (07) austretender Volumenstrom einem vom Vorlauf (03) kommenden heißen Volumenstrom bei mengbar und gemeinsam mit diesem dem heißen Bereich des Pufferspeichers (06) zuführbar ist.

3. Vorrichtung nach Anspruch 1 oder 2, **dadurch gekennzeichnet, dass** der aus dem zweiten Wärmetauscher (08) austretbare Volumenstrom:
- sofern dieser kleiner ist als der vom Vorlauf (03) kommende heiße Volumenstrom, dem zum Rücklauf (04) strömenden kalten Volumenstrom beimengbar ist, so dass ein sich aus der Differenz zwischen dem vom Vorlauf (03) kommenden heißen Volumenstrom und dem aus dem zweiten Wärmetauscher (08) austretenden kalten Volumenstrom ergebender verbleibender Volumenstrom durch den parallel zum zweiten Wärmetauscher (08) angeordneten Pufferspeicher (06) vom heißen zum kalten Bereich fließt und den Pufferspeicher (06) dabei durch Zufuhr heißen Wärmeträgermediums und gleichzeitiger Abgabe kalten Wärmeträgermediums auflädt, oder
- sofern dieser grösser ist als der vom Vorlauf (03) kommende heiße Volumenstrom, von dem zum Rücklauf (04) strömenden kalten Volumenstrom abzweigbar ist, so dass ein sich aus der Differenz zwischen dem vom Vorlauf (03) kommenden heißen Volumenstrom und dem aus dem zweiten Wärmetauscher (08) austretenden kalten Volumenstrom ergebender verbleibender Volumenstrom durch den parallel zum zweiten Wärmetauscher (08) angeordneten Pufferspeicher (06) vom kalten zum heißen Bereich fließt und den Pufferspeicher (06) dabei entlädt.

4. Vorrichtung nach Anspruch 1, 2 oder 3 **gekennzeichnet durch** mindestens einen in den Primärkreislauf (02) eingebundenen und von dem Wärmeträgermedium durchströmbaren Heizkreis (18).

5. Vorrichtung nach Anspruch 4, **dadurch gekennzeichnet, dass** ein Volumenstrom für den Heizkreis (18) dem Pufferspeicher (06) aus dessen oberem, heißen Bereich und/oder aus dessen mittlerem, warmen Bereich entnehmbar ist und dem Pufferspeicher (06) nach Durchlaufen des Heizkreises (18) einem unterhalb desjenigen Bereichs, aus dem die Entnahme stattgefunden hat, liegenden Bereich wieder zuführbar ist.

6. Vorrichtung nach einem der vorhergehenden Ansprüche, **dadurch gekennzeichnet, dass** der zweite Verbrauchskreislauf (10) in den ersten Verbrauchskreislauf (09) mündet.

7. Vorrichtung nach einem der vorhergehenden Ansprüche, **gekennzeichnet durch** einen ersten Verbrauchskreislauf (09) zur Warmwasserzirkulation und einen zweiten Verbrauchskreislauf (10) zur Frischwassererwärmung.

8. Vorrichtung nach einem der vorhergehenden Ansprüche, **gekennzeichnet durch** einen zwischen Wärmequelle (05) und Primärkreislauf (02) angeordneten Sekundärkreislauf (22), in dem ein zweites Wärmeträgermedium zirkulierbar ist, wobei die von der Wärmequelle (05) zur Verfügung gestellte Wärme mittels eines im Sekundärkreislauf (22) entfernt von der Wärmequelle (05) und im Primärkreislauf (02) zwischen Rücklauf (04) und Vorlauf (03) angeordneten dritten Wärmetauschers (23) vom Sekundärkreislauf (22) an den Primärkreislauf (02) abgebbar ist.

9. Vorrichtung nach einem der vorhergehenden Ansprüche, **dadurch gekennzeichnet, dass** wenigstens für die in den Pufferspeicher (06) mit verschiedenen Temperaturen eintretende Volumenströme Radialdiffusoren (21) in unterschiedlich warmen Bereichen des Pufferspeichers (06) angeordnet sind.

10. Vorrichtung nach einem der vorhergehenden Ansprüche, **dadurch gekennzeichnet, dass** der Pufferspeicher (06) wenigstens zwei über eine Verbindungsleitung miteinander kommunizierende Behälter umfasst.

11. Verfahren zur Wärmeversorgung von Gebäuden, bei dem
- ein mit einem Vorlauf (03) und einem Rücklauf (04) mit einer Wärmequelle (05) verbundener Primärkreislauf (02) von einem Wärmeträgermedium durchströmt wird,
- wobei in dem Primärkreislauf (02) wenigstens ein Pufferspeicher (06), sowie ein erster Wärmetauscher (07) und ein zweiter Wärmetauscher (08) angeordnet sind, und wobei der zweite Wärmetauscher (08) außerhalb des Pufferspeichers (06) angeordnet ist,
- welche Wärmetauscher (07, 08) primärseitig von dem Wärmeträgermedium durchströmt werden, und von denen der erste Wärmetauscher (07) sekundärseitig mit einem ersten Verbrauchskreislauf (09) und der zweite Wärmetauscher (08) sekundärseitig mit einem zweiten Verbrauchskreislauf (10) verbunden ist,
- wobei der zweite Wärmetauscher (08) parallel zum Pufferspeicher (06) angeordnet ist und ein mit einem kalten Bereich des Pufferspeichers (06) verbundener Zu- und Ablauf (14), ein Ablauf (15) des zweiten Wärmetauschers (08) und der Rücklauf (04) ineinander münden,
**dadurch gekennzeichnet, dass**
- der erste Wärmetauscher (07) außerhalb des Pufferspeichers (6) angeordnet ist,
- ein vom Vorlauf (03) kommender heißer Volumenstrom einem heißen Bereich des Pufferspeichers (06) zuströmt und primärseitig durch den ersten Wärmetauscher (07) und zweiten Wärmetauscher (08) hindurch tretende Volumenströme aus dem heißen Bereich des Pufferspeichers (06) entnommen werden.

## Claims

1. An apparatus (01) for the heat supply of buildings, comprising
- a primary circuit (02) capable of having a heat exchanger medium flow through it and connected to a heat source (05) by a forward feed line (03) and a return feed line (04),
- wherein at least one buffer store (06) as well as a first heat exchanger (07) and a second heat exchanger (08) are situated in the primary circuit (02), and wherein the second heat exchanger (08) is situated outside the buffer store (06),
- which heat exchangers (07, 08) are capable of having the heat exchanger medium flow through them on the primary side, and the first heat exchanger (07) of which is connected to a first consumption circuit (09) on the secondary side and the second heat exchanger (08) of which is connected to a second consumption circuit (10) on the secondary side,
- wherein the second heat exchanger (08) is arranged parallel to the buffer store (06), and an infeed and outfeed line (14) connected to a cold region of the buffer store (06), an outfeed line (15) of the second heat exchanger (08) and the return feed line (04) open into one another,
- **characterized in that**
- the first heat exchanger (07) is situated outside the buffer store (6),
- a hot volume flow arriving from the forward feed line (03) is capable of being fed to a hot region of the buffer store (06), and volume flows passing through the first heat exchanger (07) and the second heat exchanger (08) on the primary side are capable of being removed from the hot region of the buffer store (06).

2. An apparatus according to claim 1, **characterized in that** a volume flow issuing from the first heat exchanger (07) is capable of being admixed with a hot volume flow arriving from the forward feed line (03) and of being supplied jointly with the latter to the hot region of the buffer store (06).

3. An apparatus according to claim 1 or 2, **characterized in that** the volume flow capable of issuing from the second heat exchanger (08):
- if it is smaller than the hot volume flow which arrives from the forward feed line (03), is capable of being admixed with the cold volume flow flowing to the return feed line (04), so that a remaining volume flow resulting from the difference between the hot volume flow arriving from the forward feed line (03) and the cold volume flow issuing from the second heat exchanger (08) flows through the buffer store (06) arranged parallel to the second heat exchanger (08) from the hot to the cold region and charges the buffer store (06) in this case by the supply of hot heat exchanger medium and the simultaneous delivery of cold heat exchanger medium, or
- if it is larger than the hot volume flow which arrives from the forward feed line (03), is capable of being diverted from the cold volume flow flowing to the return feed line (04), so that a remaining volume flow resulting from the difference between the hot volume flow arriving from the forward feed line (03) and the cold volume flow issuing from the second heat exchanger (08) flows through the buffer store (06) arranged parallel to the second heat exchanger (08) from the cold to the hot region and discharges the buffer store (06) in this case.

4. An apparatus according to claim 1, 2 or 3, **characterized by** at least one heating circuit (18) integrated in the primary circuit (02) and capable of having the heat exchanger medium flow through it.

5. An apparatus according to claim 4, **characterized in that** a volume flow for the heating circuit (18) is capable of being removed from the buffer store (06) out of the upper, hot region thereof and/or out of the middle, warm region thereof and is capable of being supplied again to the buffer store (06) after passing through the heating circuit (18) to a region situated below that region from which the removal has taken place.

6. An apparatus according to any one of the preceding claims, **characterized in that** the second consumption circuit (10) opens into the first consumption circuit (9).

7. An apparatus according to any one of the preceding claims, **characterized by** a first consumption circuit (09) for warm water circulation and a second consumption circuit (10) for the heating of fresh water.

8. An apparatus according to any one of the preceding claims, **characterized by** a secondary circuit (22) which is arranged between the heat source (05) and the primary circuit (02) and in which a second heat exchanger medium is capable of circulating, wherein the heat made available by the heat source (05) is capable of being delivered from the secondary circuit (22) to the primary circuit (02) by means of a third heat exchanger (23) situated in the secondary circuit (22) at a distance from the heat source (05) and in the primary circuit (02) between the return feed line (04) and the forward feed line (03).

9. An apparatus according to any one of the preceding claims, **characterized in that** radial diffusors (21) are arranged in regions of the buffer store (06) of differing warmth at least for the volume flows entering the buffer store (06) at different temperatures.

10. An apparatus according to any one of the preceding claims, **characterized in that** the buffer store (06) comprises at least two containers communicating with each other by way of a connection line.

11. A method of supplying heat to buildings, in which
- a primary circuit (02) connected to a heat source (05) by a forward feed line (03) and a return feed line (04) has a heat exchanger medium flow through it,
- wherein at least one buffer store (06) as well as a first heat exchanger (07) and a second heat exchanger (08) are situated in the primary circuit (02), and wherein the second heat exchanger (08) is situated outside the buffer store (06),
- which heat exchangers (07, 08) have the heat exchanger medium flow through them on the primary side, and the first heat exchanger (07) of which is connected to a first consumption circuit (09) on the secondary side and the second heat exchanger (08) of which is connected to a second consumption circuit (10) on the secondary side,
- wherein the second heat exchanger (08) is arranged parallel to the buffer store (06), and an infeed and outfeed line (14) connected to a cold region of the buffer store (06), an outfeed line (15) of the second heat exchanger (08) and the return feed line (04) open into one another,
- **characterized in that**
- the first heat exchanger (07) is situated outside the buffer store (6),
- a hot volume flow arriving from the forward feed line (03) flows to a hot region of the buffer store (06), and volume flows passing through the first heat exchanger (07) and the second heat exchanger (08) on the primary side are removed from the hot region of the buffer store (06).

## Revendications

1. Dispositif (01) servant à l'alimentation en chaleur de bâtiments, comprenant :
- un circuit primaire (02) pouvant être parcouru par un milieu caloporteur, relié par une arrivée (03) et par un retour (04) à une source de chaleur (05),
- dans lequel au moins un réservoir tampon (06), ainsi qu'un premier échangeur de chaleur (07) et un deuxième échangeur de chaleur (08) sont disposés dans le circuit primaire (02), et dans lequel le deuxième échangeur de chaleur (08) est disposé en dehors du réservoir tampon (06),
- lesquels échangeurs de chaleur (07, 08) peuvent être parcourus côté primaire par le milieu caloporteur, le premier échangeur de chaleur (07) étant relié côté secondaire à un premier circuit consommateur (09) et le deuxième échangeur de chaleur (08) étant relié côté secondaire à un deuxième circuit consommateur (10),
- dans lequel le deuxième échangeur de chaleur (08) est disposé de manière parallèle par rapport au réservoir tampon (06) et qu'une alimentation et une évacuation (14) reliées à une zone froide du réservoir d'accumulation (06), une évacuation (15) du deuxième échangeur de chaleur (08) et le retour (04) débouchent les uns dans les autres,
- **caractérisé en ce que**
- le premier échangeur de chaleur (07) est disposé en dehors du réservoir d'accumulation (6),
- un flux volumique très chaud provenant de l'arrivée (03) peut être acheminé vers la zone très chaude du réservoir d'accumulation (06), et **en ce que** des flux volumiques entrant côté primaire en traversant le premier échangeur de chaleur (07) et le deuxième échangeur de chaleur (08) peuvent être prélevés de la zone très chaude du réservoir d'accumulation (06).

2. Dispositif selon la revendication 1, **caractérisé en ce qu'**un flux volumique sortant du premier échangeur de chaleur (07) peut être mélangé à un flux volumique très chaud provenant de l'arrivée (03) et peut être acheminé conjointement avec ce dernier à la zone très chaude du réservoir d'accumulation (06).

3. Dispositif selon la revendication 1 ou 2, **caractérisé en ce que** le flux volumique pouvant sortir du deuxième échangeur de chaleur (08) :
- peut être mélangé au flux volumique froid s'écoulant en direction du retour (04), dans la mesure où ledit flux volumique est inférieur au flux volumique chaud provenant de l'arrivée (03) de sorte qu'un flux volumique restant résultant de la différence entre le flux volumique chaud provenant de l'arrivée (03) et le flux volumique froid sortant du deuxième échangeur de chaleur (08) s'écoule en passant par le réservoir d'accumulation (06) disposé de manière parallèle par rapport au deuxième échangeur de chaleur (08) de la zone très chaude à la zone froide et recharge ce faisant le réservoir d'accumulation (06) par l'amenée d'un milieu caloporteur chaud et par la distribution simultanée du milieu caloporteur froid, ou
- dans la mesure où ledit flux volumique est supérieur au flux volumique chaud provenant de l'arrivée (03), **en ce qu'**il peut être dévié du flux volumique froid s'écoulant en direction du retour (04) de sorte qu'un flux volumique restant résultant de la différence entre le flux volumique très chaud provenant de l'arrivée (03) et le flux volumique froid sortant du deuxième échangeur de chaleur (08) s'écoule en passant par le réservoir d'accumulation (06) disposé de manière parallèle par rapport au deuxième échangeur de chaleur (08) de la zone froide à la zone chaude et décharge ce faisant le réservoir d'accumulation (06).

4. Dispositif selon la revendication 1, 2 ou 3, **caractérisé par** au moins un cycle de chauffage (18) intégré dans le circuit primaire (02) et pouvant être parcouru par le milieu caloporteur.

5. Dispositif selon la revendication 4, **caractérisé en ce qu'**un flux volumique destiné au cycle de chauffage (18) peut être prélevé du réservoir d'accumulation (06) depuis la zone chaude supérieure de ce dernier et/ou depuis la zone chaude médiane de ce dernier, et **en ce qu'**il peut être ramené au réservoir d'accumulation (06), après le passage par le cycle de chauffage (18) à une zone située en dessous de ladite zone, à partir de laquelle précisément le prélèvement a lieu.

6. Dispositif selon l'une quelconque des revendications précédentes, **caractérisé en ce que** le deuxième circuit consommateur (10) débouche dans le premier circuit consommateur (09).

7. Dispositif selon l'une quelconque des revendications précédentes, **caractérisé par** un premier circuit consommateur (09) servant à la circulation de l'eau chaude et par un deuxième circuit consommateur (10) servant au réchauffage de l'eau fraîche.

8. Dispositif selon l'une quelconque des revendications précédentes, **caractérisé par** un circuit secondaire (22) disposé entre la source de chaleur (05) et le circuit primaire (02), dans lequel un deuxième milieu caloporteur peut être mis en circulation, dans lequel que la chaleur fournie par la source de chaleur (05) peut être distribuée au circuit primaire (02) par le circuit secondaire (22) au moyen d'un troisième échangeur de chaleur (23) disposé dans le circuit secondaire (22) à distance de la source de chaleur (05) et dans le circuit primaire (02) entre le retour (04) et l'arrivée (03).

9. Dispositif selon l'une quelconque des revendications précédentes, **caractérisé en ce que** des diffuseurs radiaux (21) sont disposés dans des zones, présentant des chaleurs différentes, du réservoir d'accumulation (06) au moins pour les flux volumiques entrant dans le réservoir d'accumulation (06) à des températures différentes.

10. Dispositif selon l'une quelconque des revendications précédentes, **caractérisé en ce que** le réservoir d'accumulation (06) comprend au moins deux récipients communiquant l'un avec l'autre par l'intermédiaire d'une conduite de liaison.

11. Procédé servant à alimenter en chaleur des bâtiments, dans lequel
- un circuit primaire (02) relié par une arrivée (03) et par un retour (04) à une source de chaleur (05) est parcouru par un milieu caloporteur,
- sachant qu'au moins un réservoir d'accumulation (06), ainsi qu'un premier échangeur de chaleur (07) et un deuxième échangeur de chaleur (08) sont disposés dans le circuit primaire (02), et dans lequel le deuxième échangeur de chaleur (08) est disposé en dehors du réservoir d'accumulation (06),
- lesquels échangeurs de chaleur (07, 08) sont parcourus côté primaire par le milieu caloporteur, le premier échangeur de chaleur (07) étant relié côté secondaire à un premier circuit consommateur (09) et le deuxième échangeur de chaleur (08) étant relié côté secondaire à un deuxième circuit consommateur (10),
- dans lequel le deuxième échangeur de chaleur (08) est disposé de manière parallèle par rapport au réservoir d'accumulation (06), et qu'une arrivée et une alimentation (14) reliées à une zone froide du réservoir d'accumulation (06), une évacuation (15) du deuxième échangeur de chaleur (08) et le retour (04) débouchent les uns dans les autres,
**caractérisé en ce que**
- le premier échangeur de chaleur (07) est disposé en dehors du réservoir d'accumulation (06),
- un flux volumique chaud provenant de l'arrivée (03) est amené à une zone chaude du réservoir d'accumulation (06), et **en ce que** des flux volumiques entrant côté primaire en traversant le premier échangeur de chaleur (07) et le deuxième échangeur de chaleur (08) sont prélevés de la zone chaude du réservoir d'accumulation (06).
